# EUROPEAN PATENT SPECIFICATION

(11) **EP 2 165 873 B1**
(45) Date of publication and mention of the grant of the patent: **27.04.2011**
(21) Application number: 09169758.1
(22) Date of filing: 08.09.2009
(51) Int. Cl.: B60K 15/04

(54) **Antitheft device, particularly for preventing drawing of fuel from tanks**
Diebstahlschutzvorrichtung, insbesondere zum Vorbeugen des Absaugens von Kraftstoff aus Tanks
Dispositif antivol, en particulier pour prévenir le soutirage de carburant de réservoirs

(30) Priority: 22.09.2008 IT TV20080119
(43) Date of publication of application: 24.03.2010
(73) Proprietor: Lago Accessori S.r.l., 35014 Fontaniva (PD) (IT)
(72) Inventor: Lago, Fabio, 35013 Cittadella PD (IT); Canton, Cristian Antonio, 35014 Fontaniva PD (IT)
(74) Representative: Modiano, Micaela Nadia

(56) References cited:
- EP-A- 1 325 830
- WO-A-2006/048659
- DE-C- 870 072
- DE-U1-202004 012 096
- US-A- 3 951 297
- US-A- 5 025 946

## Description

The present invention relates to an antitheft device, particularly for preventing extraction of fuel from tanks.

Currently it is known to provide antitheft solutions adapted to prevent the drawing of diesel fuel: these are of a mechanical type, in which substantially one chooses to try to minimize the cross-section for entry into the tank in order to hinder the insertion therein of flexible hoses that are adapted to extract the fuel.

Document DE 870 072 C discloses such an anti-theft device and shows all the features of the preamble of claim 1. In such known solutions, an attempt is made to prevent access to the tank by using a tube, which is located between the inlet of the refueling adapter and the inside of the tank and contains a perforated metallic mesh or a web of laminae, also arranged on multiple levels and mutually staggered.

These solutions, which therefore substantially consist in using a mechanical obstruction, while allowing a sufficient level of hindrance, nonetheless hinder the passage into the tank, for example of diesel fuel, during refueling, since the diesel fuel is forced to be diverted and repelled in multiple directions, forcing the person who performs refueling to throttle the flow of fuel, prolonging the time needed to fill the tank.

In known solutions, moreover, a direct connection, albeit a reduced one, remains between the refueling adapter and the tank and still allows drawing if one uses sufficiently narrow cannulaes.

Moreover, if the system for blocking the extraction of diesel fuel is placed on the bottom of the tube, it is submerged completely once the tank is filled with fuel.

In this case, once the cap of the tank has been unscrewed, it is possible to extract easily the diesel fuel comprised between the surface of the liquid and the bottom of the tube.

Since some tanks have capacities of even 1000 liters, it is easily understandable that a few centimeters of diesel fuel, multiplied by the horizontal surface of the fuel contained in the tank, mean dozens of liters of fuel that can be removed easily.

In order to limit this drawing, it is possible to arrange the bottom of the tube provided with the obstruction as high as possible: this contraction of the length of the tube, however, entails the need to provide the extraction or addition of an extension in order to be able to insert the refueling nozzle.

A further problem is the need to connect the tube provided with the obstruction to the inlet of the tanks: known coupling systems provide for the use either of metallic elements to be deformed, such as for example metallic tabs, or of perforation and riveting of an antitheft ring on the body of the tank.

All these known systems require more or less time-consuming operations and specific equipment, and nevertheless allow equipped individuals with bad intentions to remove the device.

The aim of the present invention is to solve the described technical problems, eliminating the drawbacks of the cited background art, by providing a device for tanks that makes it possible to avoid fuel theft and at the same time allows optimum and quick dispensing of the fuel during insertion at the pump.

Within this aim, an object of the invention is to provide a device that combines the above characteristics with that of preventing fuel drawing from the tank even when the tank is full.

A further object of the invention is to provide an antitheft device that can be anchored quickly, safely and easily to the inlet of the tank.

Another object is to provide a device that is structurally simple and has low manufacturing costs.

This aim and these objects, as well as others that will become better apparent hereinafter, are achieved by an antitheft device, particularly for preventing the drawing of fuel from a tank, comprising a tube, which has a first ring that can be associated with an adapter for accessing a tank, and which comprises internally, adjacent to said first ring, a guiding funnel for an underlying axial cone that is adapted to guide and direct the flow of the fuel along a fluid stream, characterized in that is has, at its base, an outside diameter that is slightly smaller than the inside diameter of said tube, so as to form an output section for the passage of the fuel, a guide for a float being associated slidably coaxially to said tube, said float being adapted to move between a closed condition and an open condition of said output section, means being provided in order to allow the filling of the tank even beyond the level of arrangement of said float in the inactive condition.

Further characteristics and advantages of the invention will become better apparent from the following detailed description of a particular but not exclusive embodiment thereof, illustrated by way of non-limiting example in the accompanying drawings, wherein:
Figure 1 is a partially sectional side perspective view of a device according to the invention;
Figure 2 is a detail view of the device;
Figure 3 is a diametrical sectional view of the region affected by the cone;
Figure 4 is a sectional view of the region affected by the float;

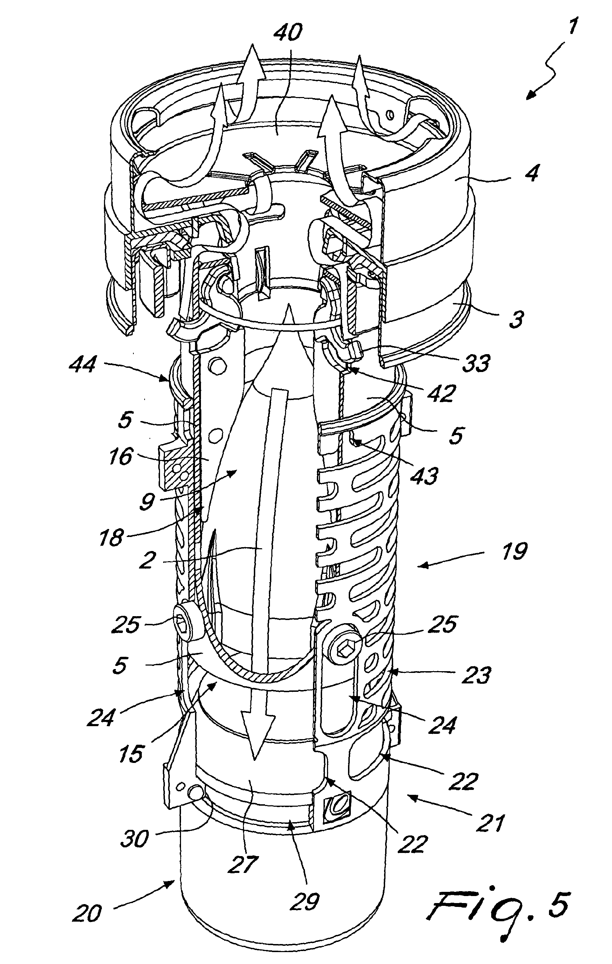

Figure 5 is a cutout view of the device, illustrating the flows of the fuel and of the air, in which the fuel dispensing nozzle is not shown;
Figures 6 and 7 are views, similar to Figures 2 and 3, of the condition for dispensing the fuel in the tank, wherein, in Figure 6, the fuel dispensing nozzle is again not shown;
- Figures 8, 9, 10 and 11 are views, similar to Figures 1, 2, 3 and 4, of the device in the condition in which the fuel is being dispensed and the float is blocked so as to allow filling of the tank;

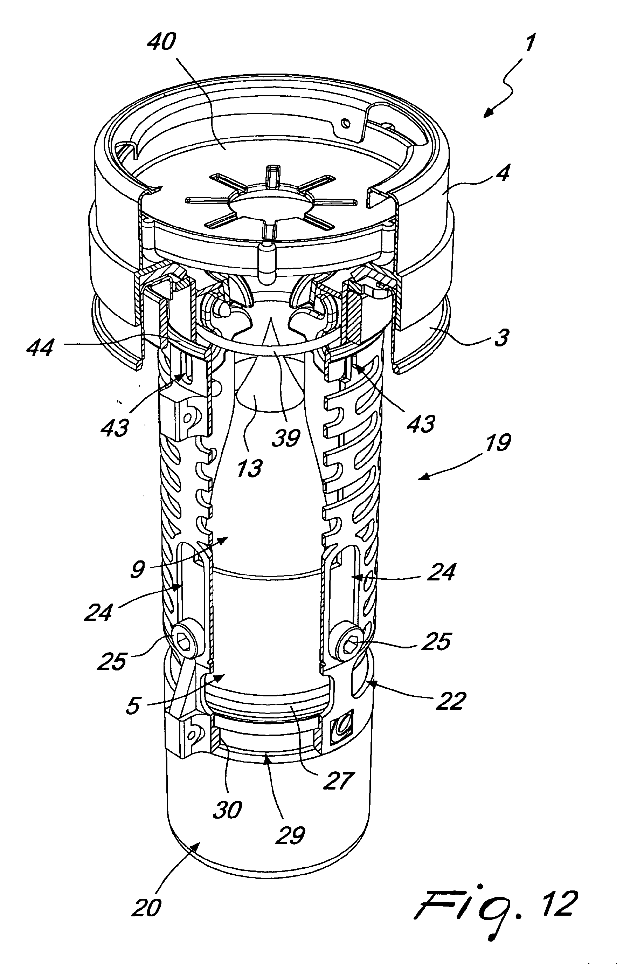

Figure 12 is a view, similar to Figure 1, of the device in which the tank has been filled, the dispensing nozzle has been extracted without however blocking its descent, and the float has risen to block the fuel outflow section;

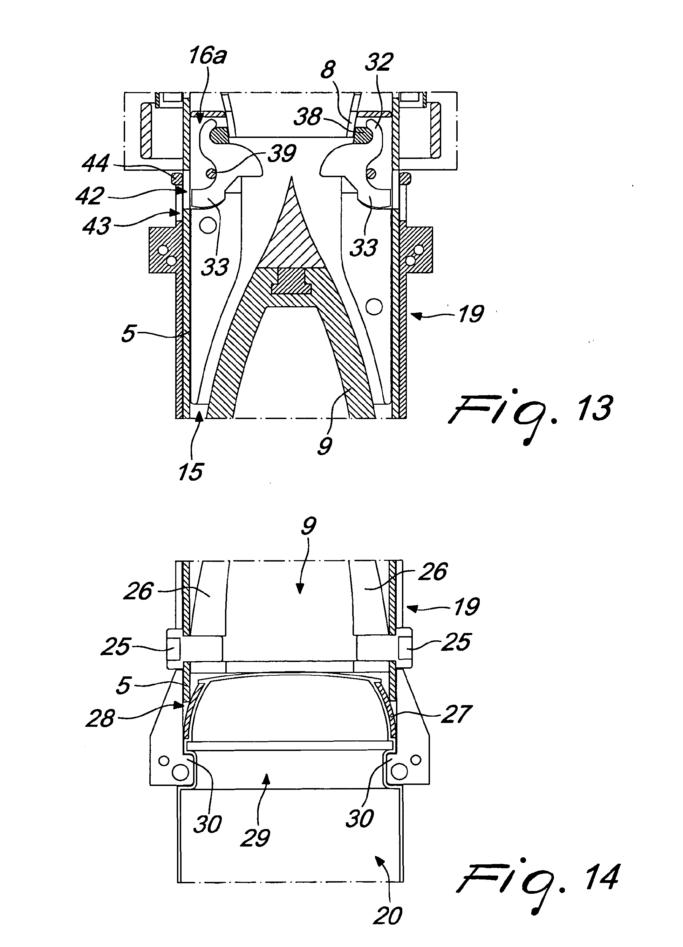

Figures 13 and 14 are views of two details of the device in the condition of Figure 12;

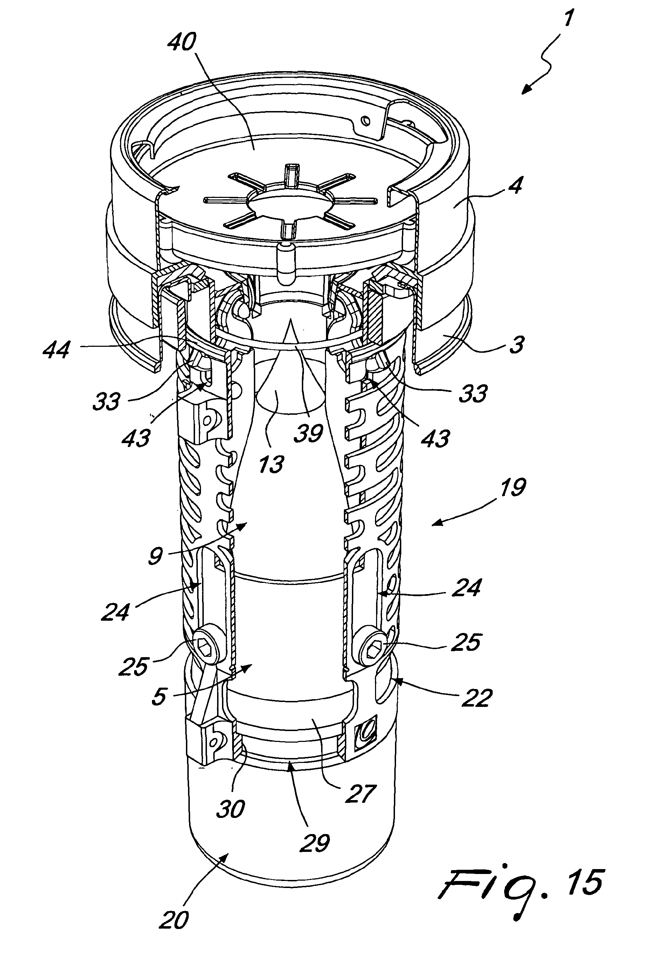

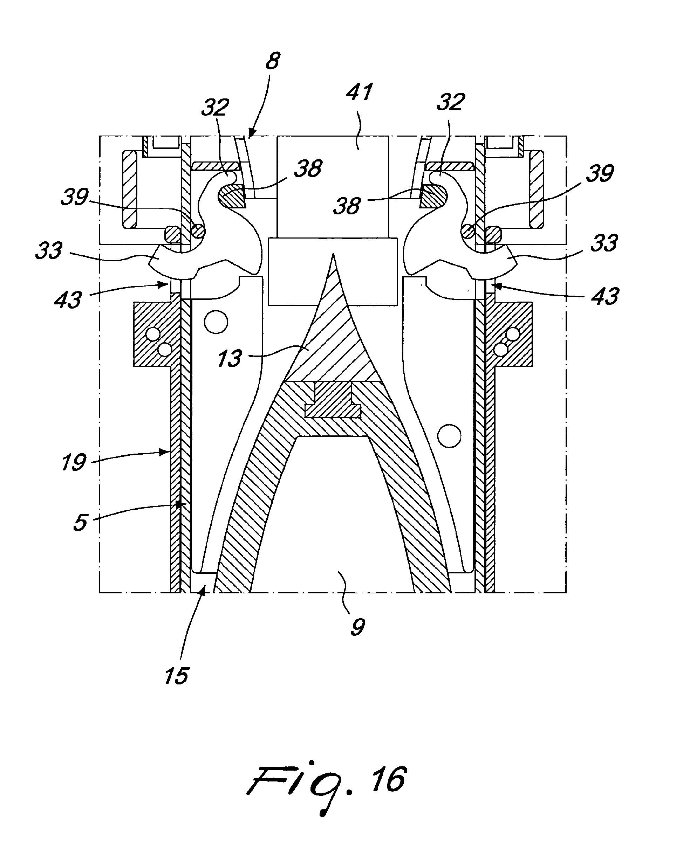

Figures 15 and 16 are views of the device in the condition in which the float is raised and every possible stroke thereof is blocked;

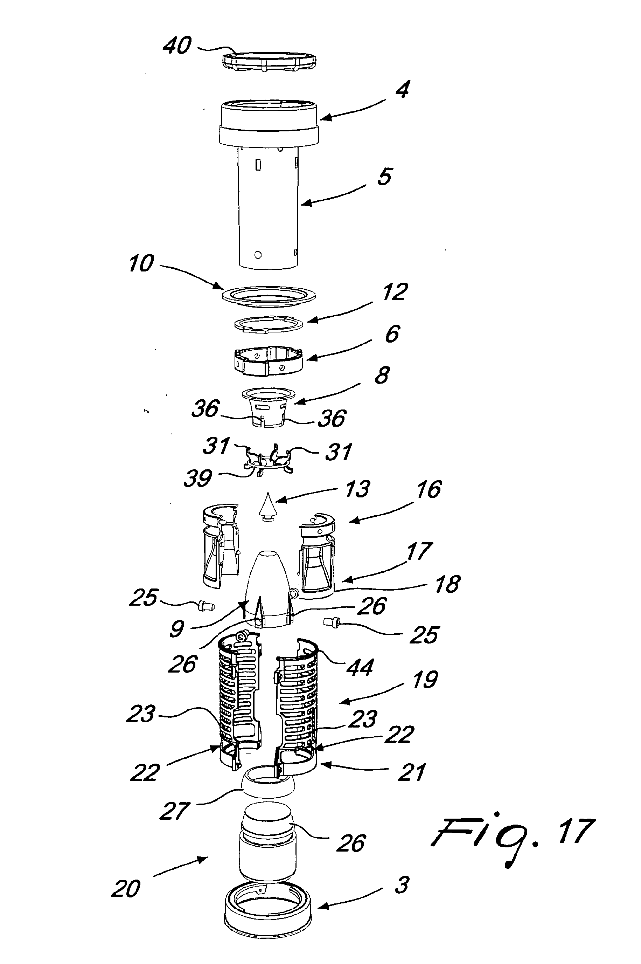

Figure 17 is an exploded view of the device;

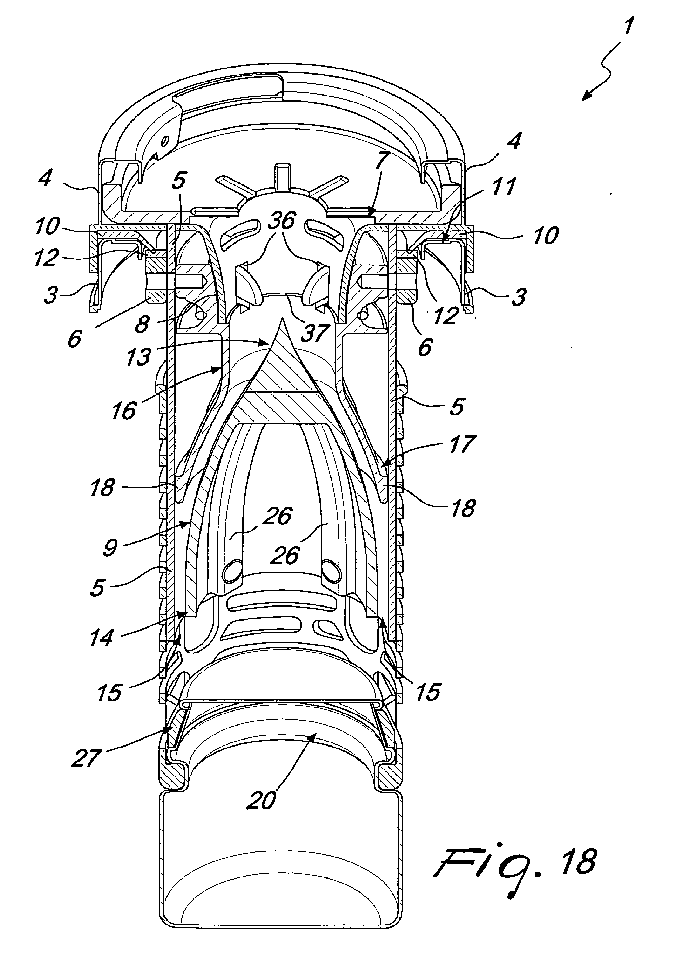

Figure 18 is a cutout view of the device.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

With reference to the figures, the reference numeral 1 designates an antitheft device, particularly for preventing the drawing of fuel, schematically designated by the reference numeral 2, from tanks (not shown) which are provided with a fuel access adapter 3.

The device comprises means adapted to allow, once the antitheft device 1 has been inserted and rotated partially within the adapter 3, non-removable interconnection with respect to the adapter 3.

Such means comprise a first ring 4, which is fixed and jointly connected both to the end of a tube 5, which protrudes downward and axially from it, and to a second ring 6, which is arranged coaxially to the tube 5 and is coupled thereto.

The end 7 of a guiding funnel 8 for an underlying axial cone 9, adapted to guide and direct the flow of fuel 2 along a fluid stream, is associated axially internally and adjacent to the first ring 4.

A first gasket 10, advantageously of the cup-shaped type, is interposed between the lower surface, which is annular, of the first ring 4 and the underlying second ring 6, and in the condition in which the device 1 is inserted in the adapter 3 the gasket interacts partially with the upper surface 11 of the adapter 3.

The first gasket 10 also interacts, in the central region that does not interact with the surface 11, with an underlying third ring 12, which can be arranged above the underlying second ring 6, which can rotate with respect to the third ring 12.

The cone 9 has, in an upper region, a tip 13 that is directed toward the funnel 8 and is adapted to improve the behavior of the flow of fuel.

The cone 9 has, at its base 14, an outside diameter that is slightly smaller than the inside diameter of the tube 5 so as to form an output section 15 for the passage of fuel.

A tubular internal guide 16 is present coaxially with the cone 9, so as to also affect the overlying region of the tip 13, surrounds externally and in an upper region the outer surface of the funnel 8, and rests on, and is coupled to, the tube 5 and to the second ring 6.

The internal guide 16 extends axially, following internally the shape of the cone 9 so as to form, together with said cone, a path for the fuel which is adapted to form a fluid stream.

The stability of the position of the internal guide 16 is achieved because said guide has, at its lower end 17, an annular ridge 18 that rests on the inner lateral surface of the tube 5.

A guide 19 for a float 20 is associated slidably, externally to the tube 5, at the region affected by the cone 9; the float 20 is adapted to move between a closed condition and an open condition of the output section 15.

The guide 19 has a cage-like shape, advantageously provided in two parts that can be mutually coupled, and has, on the lateral surface, proximate to its lower end 21, first openings 22 and second openings 23, which are adapted to allow the outflow of the fuel and are preferably annular.

The axial sliding of the guide 19 with respect to the tube 5 is allowed by means of the presence of two pairs of preset third openings 24, formed diametrically with respect to each other and axially with respect to the cage 19.

First screws 25 act at the two pairs of preset third openings 24 and are associated with the tube 5 and protrude radially from it and are further connected to suitable seats formed in four diametrical ribs 26, which protrude axially with respect to the outer lateral surface of the cone 9 at its base 14.

The first screws 25 ensure correct axial positioning of the cone 9 with respect to the tube 5.

The float 20 is substantially cylindrical and has, at its upper end 26, a second frustum-shaped gasket 27, which is adapted to interact with the overlying lower perimetric edge 28 of the tube 5, so as to block the passage of the fuel 2.

The float 20 has, proximate to its lower end, an annular seat 29 for complementarily shaped teeth 30 that protrude radially and toward the inside of the guide 19 at its lower end 21, so as to allow the connection of the float 20 to the guide 19.

The device comprises means that make it possible to fill the tank even beyond the level of arrangement of the float 20 in the inactive condition.

Such means consist of four retractable tabs 31, each of which is substantially S-shaped in plan view, so as to form an upper wing 32 and a lower wing 33, between which a tooth 34 is provided and protrudes which is beak-shaped and therefore has an arc-like upper edge 35.

Each one of the teeth 34 acts at appropriately provided grooves 36 formed axially with respect to the-funnel 8 at the lower end 37 thereof, so as to allow the positioning of the teeth 34 inside the funnel 8 in a region above the tip 13 of the cone 9.

Advantageously, the lower end 37 of the funnel 8 is connected at an appropriately provided seat formed on the internal guide 16, so as to form a continuous duct for the inflow of fuel.

Advantageously, the grooves 36 can affect partially the internal guide 16.

The teeth 34 are retractable by way of the fact that the upper wing 32 is coupled rotatably to an adapted ridge 38 arranged in the internal guide 16 adjacent to the outer lateral surface of the funnel 8.

The lower wing 33 of each tooth 34 is forced so as to keep the teeth 34 at the fuel inflow duct by means of an adapted elastic element 39 that wraps around all of the teeth 34.

The retractable tabs 31 are accommodated at an adapted compartment 16a provided on the internal guide 16 at its upper end.

A third gasket 40 can be arranged at the first ring 4.

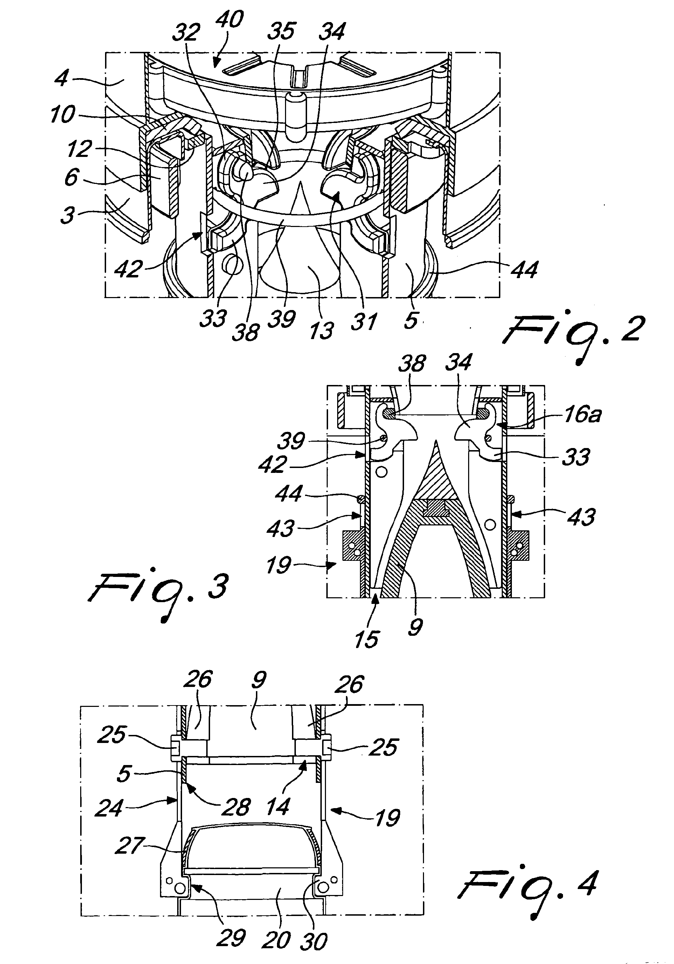

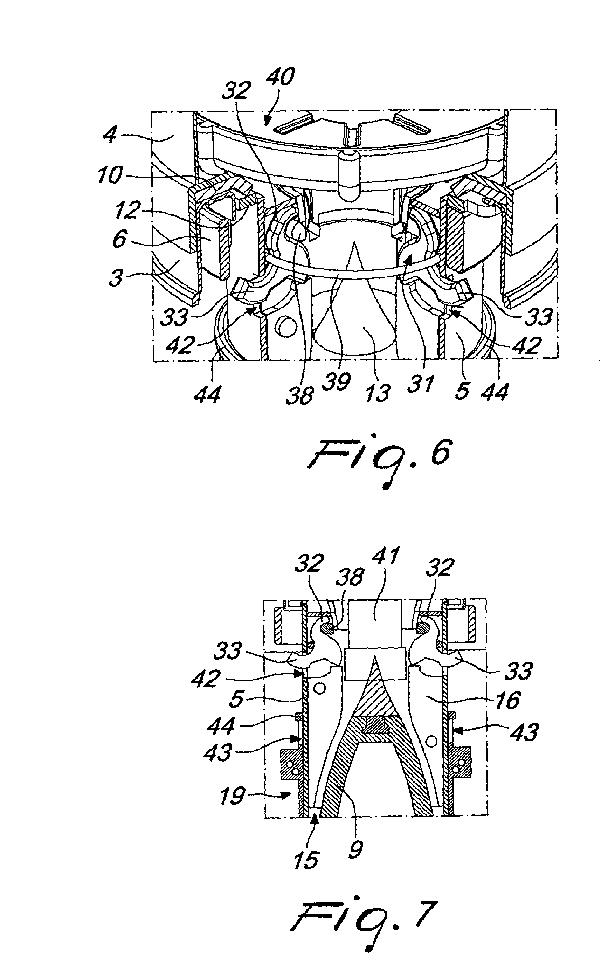

The position of the retractable tabs 31 can be modified from the stable condition shown in Figures 2 and 3 by the insertion of the fuel dispensing nozzle 41, which, as in the example shown in Figure 7, interacts with the arc-like upper edge 35 of each tooth 34, forcing it to rotate until it lies within each groove 36.

This movement is allowed because the end of each lower wing 33 of each tooth 34 faces fourth openings 42 formed at the tube 5; in this condition, the elastic element 39 is elongated.

In the condition in which the lower wing 33 protrudes at the fourth openings 42, the condition can occur, as described hereinafter, in which the lower wings 33 affect adapted fifth openings 43 provided on the guide 19 adjacent to its upper end 44.

Use of the invention is therefore as follows: starting from the condition shown in Figures 4, 6 and 7, the condition is shown in which the tank is empty and the nozzle 41 has been inserted to dispense the fuel.

In this condition, the nozzle pushes the teeth 34 of the retractable tabs 31 so that they rotate and make the lower wings 33 protrude at the fourth openings 42, thus allowing fuel dispensing.

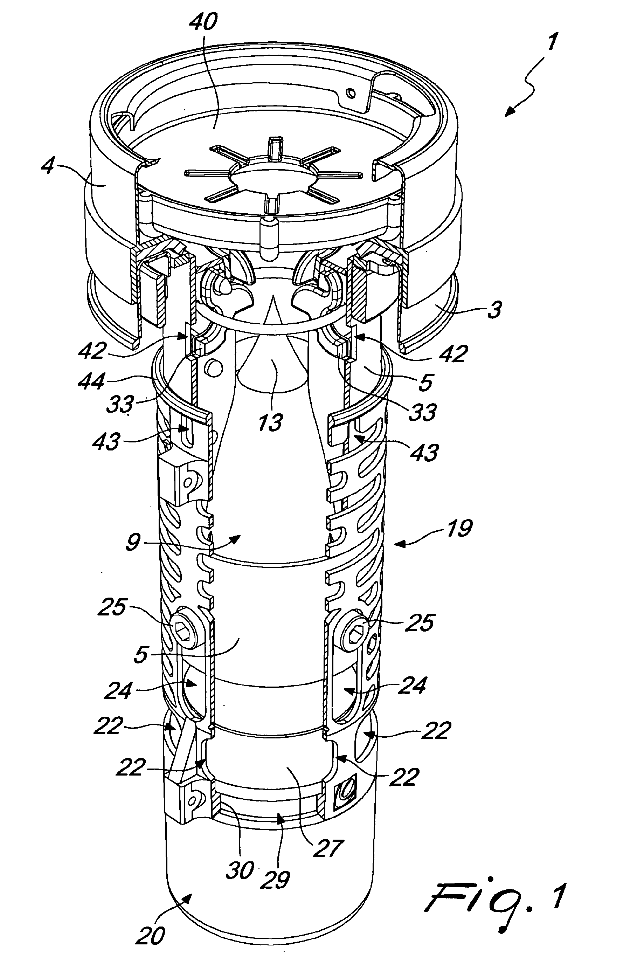

In this condition, the guide 19 is lowered, in the condition shown in Figure 1.

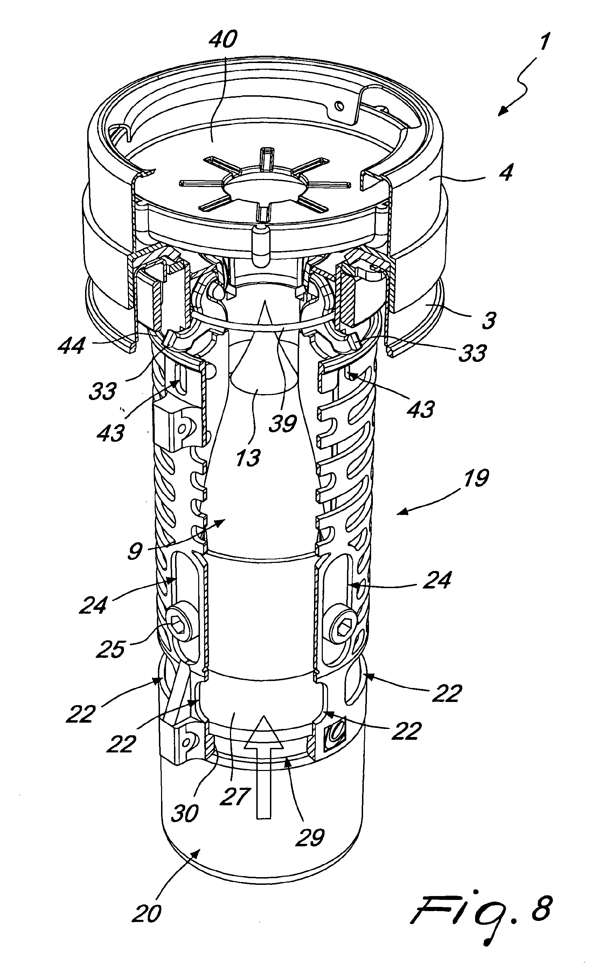

Figure 8 already illustrates the initial movement performed by the float 20 as the fuel flows into the tank.

The fuel can flow by means of the fact that the output section 15 is clear, since the second gasket 27 of the float 20 does not interact with the lower perimetric edge 28 of the tube 5.

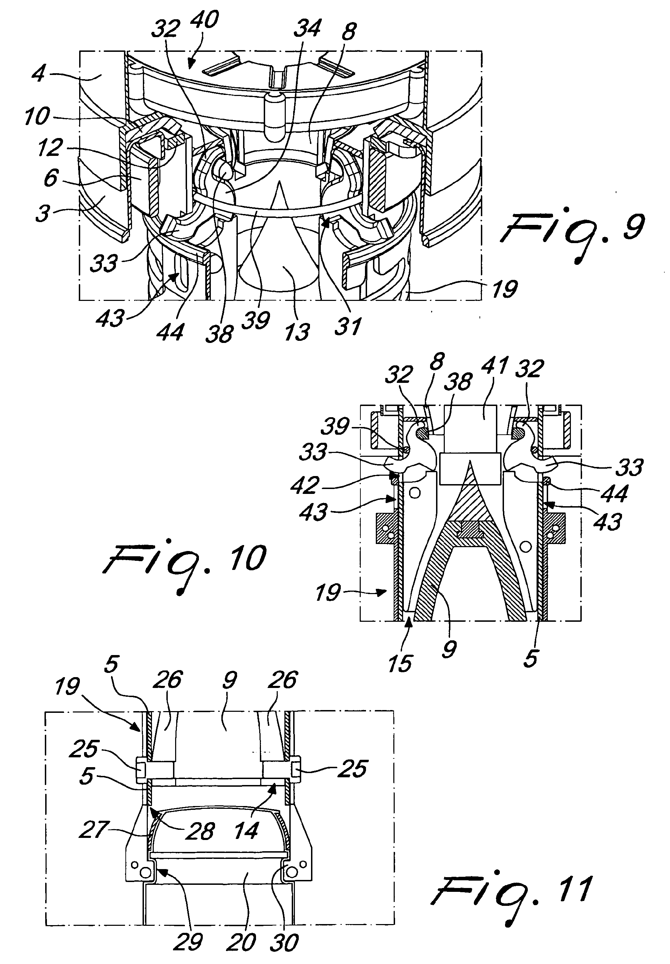

As the tank is filled, the fuel reaches, at a certain point, a level that can even rise above the float, due to the longitudinal extension of the device 1 inside the tank: in this condition, shown in Figures 9 and 10, the float still remains in such a condition as to allow the flow of fuel, since the output section 15 for the passage of fuel is still clear.

This condition is made possible by the fact that the lower wings 33 of the retractable tabs 31 interact in abutment with the upper end 44 of the guide 19, thus preventing the further rise of the float 20.

Once the tank has been filled and the fuel dispensing nozzle has been extracted, the retractable tabs 31 are forced by the elastic element 39 so that the lower wings 33 no longer affect the fourth openings 42 and therefore the fifth openings 43, and this allows the float 20 to rise further, also pushing the guide 19, whose upper end 44 is no longer blocked by the lower wings 33 of the retractable tabs 31, so that the output section 15 for the passage of fuel is blocked.

It has thus been found that the invention has achieved the intended aim and objects, a device having been devised which makes it possible to avoid fuel theft from tanks, at the same time allowing optimum and quick dispensing of fuel during insertion at the pump.

Drawing of fuel from the tank is also prevented in the condition in which the tank is full.

The antitheft device, which can be anchored rapidly, safely and easily to the inlet of the tank, is structurally simple and has low production costs.

The invention is of course susceptible of numerous modifications and variations, all of which are within the scope of the appended claims.

The materials used, as well as the dimensions that constitute the individual components of the invention, may of course be more pertinent according to specific requirements.

The various means for performing certain different functions certainly need not only coexist in the illustrated embodiment but can be present per se in many embodiments, even if they are not illustrated.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An antitheft device, particularly for preventing the drawing of fuel from a tank, comprising a tube (5), which has a first ring (4) that can be associated with an adapter for accessing a tank and which comprises internally, adjacent to said first ring (4), a guiding funnel (8) for an underlying axial cone (9) that is adapted to guide and direct the flow of the fuel along a fluid stream, **characterized in that** is has, at its base, an outside diameter that is slightly smaller than the inside diameter of said tube (5), so as to form an output section for the passage of the fuel, a guide (19) for a float (20) being associated slidably coaxially to said tube (5), said float (20) being adapted to move between a closed condition and an open condition of said output section, means being provided in order to allow the filling of the tank even beyond the level of arrangement of said float (20) in the inactive condition.

2. The device according to claim 1, **characterized in that** the end (7) of a guiding funnel (8) for an underlying axial cone (9) is axially associated internally and adjacent to said first ring (4), which cone is adapted to guide and direct the flow of the fuel (2) along a fluid stream, a first gasket (10) being interposed between the lower annular surface of said first ring (4) and an underlying second ring (6), said gasket (10) being advantageously of the cup-shaped type and which, in the condition in which the device (1) is inserted in the adapter (3), interacts partially with the upper surface (11) of said adapter (3).

3. The device according to claims 1 and 2, **characterized in that** said cone (9) is provided, in an upper region, with a tip (13) that is directed toward said funnel (8) and is adapted to improve the behavior of the flow of fuel, said cone (9) having at its base (14) an outside diameter that is slightly smaller than the inside diameter of said tube (5), so as to form an output cross-section (15) for the passage of fuel coaxially to said nozzle (9) so as to affect also the overlying region of the tip (13), there being provided an internal guide (16) that is tubular and wraps, in an upper region and externally, around the outer surface of said funnel (8) and rests on, and is coupled to, said tube (5) and said second ring (6).

4. The device according to claims 1 and 3, **characterized in that** said internal guide (16) runs axially, following internally the shape of said cone (9), so as to form, together with said cone, a path for the fuel that is adapted to form a fluid stream, the stability of the position of said internal guide (16) being obtained by providing said guide, at the lower end (17), with an annular ridge (18) that rests on the internal lateral surface of said tube (5).

5. The device according to claims 1 and 4, **characterized in that** at the region affected by said cone (9), a guide (19) for a float (20), adapted to move between a closed condition and an open condition of said output section (15), is slidably associated externally with respect to said tube (5).

6. The device according to claims 1 and 5, **characterized in that** said guide (19) is cage-shaped, advantageously provided in two parts that can be coupled to each other, and has, on its lateral surface, proximate to the lower end (21), first openings (22) and second openings (23) that are adapted to allow the outflow of the fuel and preferably have an annular shape, the axial sliding of said guide (19) with respect to said tube (5) being allowed by means of the presence of two pairs of preset third openings (24) that are formed diametrically with respect to each other and axially with respect to said cage (19).

7. The device according to claims 1 and 6, **characterized in that** first screws (25) act at said two pairs of appropriately provided third openings (24) and are associated with, and protrude radially from, said tube (5), and are further connected to appropriately provided seats that are formed in four diametrical ribs (26), which protrude axially with respect to the outer lateral surface of said cone (9) at its base (14), said first screws (25) ensuring the correct axial positioning of the cone (9) with respect to the tube (5).

8. The device according to claims 1 and 7, **characterized in that** said float (20) has a substantially cylindrical shape and, at its upper end (26), a second gasket (27), which is frustum-shaped and adapted to interact with the overlying lower perimetric edge (28) of the tube (5), so as to block the passage of the fuel (2), said float (20) having, proximate to its lower end, an annular seat (29) for complementarily shaped teeth (30) that protrude radially and toward the inside of the guide (19) at its lower end (21), so as to allow the connection of the float (20) to said guide (19).

9. The device according to claims 1 and 8, **characterized in that** it comprises means to allow the filling of said tank even beyond the level of arrangement of said float (20) in the inactive condition, said means being constituted by four retractable tabs (31), each of which has, in plan view, a substantially S-like configuration so as to form an upper wing (32) and a lower wing (33), between which a tooth (34) is obtained and protrudes, said tooth (34) being beak-shaped and therefore having an arc-like upper edge (35), each of said teeth (34) acting at slots (36) that are formed axially to said funnel (8) at the lower end (37) thereof, so as to allow the positioning of said teeth (34) within said funnel (8) in a region that lies above said tip (13) of said cone (9).

10. The device according to claims 1 and 9, **characterized in that** the lower end (37) of said funnel (8) is connected at a seat formed on said internal guide (16), so as to form a continuous duct for the inflow of fuel, said slots (36) affecting partially said internal guide (16).

11. The device according to claims 1 and 10, **characterized in that** said teeth (34) are retractable by way of the fact that said upper wing (32) is coupled rotatably to a ridge (38) that is arranged in said internal guide (16) adjacent to the outer lateral surface of said funnel (8), said lower wing (33) of each tooth (34) being forced to keep said teeth (34) at the fuel inflow duct by means of an elastic element (39), which is wound around all of said teeth (34), said retractable tabs (31) being accommodated at a compartment (16a) that is formed on said internal guide (16) at its upper end.

12. The device according to claims 1 and 11, **characterized in that** the position of said retractable tabs (31) can be modified from a stable condition, due to the insertion of the fuel dispensing nozzle (41), which interacts with the upper arc-like edge (35) of each tooth (34), forcing it to rotate until it moves inside each slot (36), elongating said elastic element, said movement being allowed because the tip of each lower wing (33) of each tooth (34) is arranged so as to face fourth openings (42) formed at said tube (5).

13. The device according to claims 1 and 12, **characterized in that** in the condition in which said lower wing (33) protrudes at said fourth openings (42), the condition can occur in which said lower wings (33) affect fifth openings (43) formed on said guide (19) adjacent to its upper end (44).

14. The device according to one or more of the preceding claims, **characterized in that** during the dispensing of the fuel in said tank, said output section (15) is free, since said second gasket (27) of said float (20) does not interact with said lower perimetric edge (28) of the tube (5), the progressive lifting of said float being limited, since said section (15) remains open, by the interaction of said lower wings (33) of said retractable tabs (31) with the upper end (44) of said guide (19), once said tank has been filled and said dispensing nozzle has been extracted said retractable tabs (31) being forced by said elastic element (39) so that said lower wings (33) no longer affect said fourth openings (42) or said fifth openings (43), so as to allow said float (20) to rise further, also pushing said guide (19), making it possible to achieve the blocking of said output section (15) for the passage of fuel.

## Patentansprüche

1. Eine Diebstahlschutzvorrichtung, insbesondere zum Verhindern des Absaugens von Kraftstoff aus einem Tank, umfassend ein Rohr (5), das einen ersten Ring (4) hat, der mit einem Adapter für den Zugriff auf einen Tank assoziiert werden kann, und das innen, angrenzend an den ersten Ring (4), einen Führungstrichter (8) für einen darunter liegenden axialen Kegel (9) hat, der ausgebildet ist, um die Strömung des Kraftstoffs entlang einem Fluidstrom zu leiten und zu lenken, **dadurch gekennzeichnet, dass** er an ihrer Basis einen Außendurchmesser hat, der etwas kleiner ist als der Innendurchmesser des Rohrs (5), um so einen Ausgangsabschnitt für den Durchfluss des Kraftstoffs zu bilden, wobei eine Führung (19) für einen Schwimmer (20) koaxial verschiebbar mit dem Rohr (5) assoziiert ist, wobei der Schwimmer (20) ausgebildet ist, um sich zwischen einem geschlossenen Zustand und einem offenen Zustand des Ausgangsabschnitts zu bewegen, wobei Mittel bereitgestellt sind, um das Füllen des Tanks selbst über die Höhe der Anordnung des Schwimmers (20) im inaktiven Zustand hinaus zu ermöglichen.

2. Die Vorrichtung gemäß Anspruch 1, **dadurch gekennzeichnet, dass** das Ende (7) eines Führungstrichters (8) für einen darunter liegenden axialen Kegel (9) axial innen und angrenzend an den ersten Ring (4) assoziiert ist, wobei der Kegel ausgebildet ist, um die Strömung des Kraftstoffs (2) entlang einem Fluidstrom zu führen und zu lenken, wobei eine erste Dichtung (10) zwischen der unteren ringförmigen Oberfläche des ersten Rings (4) und einem darunter liegenden zweiten Ring (6) angeordnet ist, wobei die Dichtung (10) vorteilhafterweise vom tassenförmigen Typ ist und wobei, in dem Zustand, in dem die Vorrichtung (1) in den Adapter (3) eingefügt wird, teilweise mit der oberen Oberfläche (11) des Adapters (3) interagiert.

3. Die Vorrichtung gemäß den Ansprüchen 1 und 2, **dadurch gekennzeichnet, dass** der Kegel (9) in einem oberen Abschnitt mit einer Spitze (13) versehen ist, die zu dem Trichter (8) ist gerichtet ist und die ausgebildet ist, um das Verhalten des Kraftstoffstroms zu verbessern, wobei der Kegel (9) an seiner Basis (14) einen Außendurchmesser hat, der etwas kleiner ist als der Innendurchmesser des Rohrs (5), und so einen Ausgangsquerschnitt (15) für den Durchfluss von Kraftstoff koaxial zu der Düse (9) zu bilden, um so auch den darüber liegenden Abschnitt der Spitze (13) zu beeinflussen, wobei eine innere Führung (16) bereitgestellt ist, die rohrförmig ist und in einem oberen Bereich und außen die äußere Oberfläche des Trichters (8) umgibt und an dem Rohr (5) und dem zweiten Ring (6) aufliegt und damit gekoppelt ist.

4. Die Vorrichtung gemäß den Ansprüchen 1 und 3, **dadurch gekennzeichnet, dass** die innere Führung (16) axial verläuft, wobei sie innen der Form des Kegels (9) folgt und so, gemeinsam mit dem Kegel, einen Weg für den Kraftstoff bildet, der ausgebildet ist, um einen Fluidstrom zu bilden, wobei die Stabilität der Position der inneren Führung (16) **dadurch** erzielt wird, dass die Führung, am unteren Ende (17), mit einem ringförmigen Grat (18) versehen ist, der an der inneren seitlichen Oberfläche des Rohrs (5) anliegt.

5. Die Vorrichtung gemäß den Ansprüchen 1 und 4, **dadurch gekennzeichnet, dass** an dem Abschnitt, der von dem Kegel (9) beeinflusst wird, eine Führung (19) für einen Schwimmer (20), ausgebildet, um sich zwischen einem geschlossenen Zustand und einem offenen Zustand des Ausgangsabschnitts (15) zu bewegen, außerhalb des Rohrs (5) verschiebbar assoziiert ist.

6. Die Vorrichtung gemäß den Ansprüchen 1 und 5, **dadurch gekennzeichnet, dass** die Führung (19) käfigförmig ist, vorteilhafterweise in zwei Teilen bereitgestellt, die miteinander gekoppelt werden können, und an ihrer seitlichen Oberfläche, nahe dem unteren Ende (21), erste Öffnungen (22) und zweite Öffnungen (23) hat, die ausgebildet sind, um das Ausströmen des
Kraftstoffs zu ermöglichen, und vorzugsweise eine Ringform haben, wobei das axiale Gleiten der Führung (19) im Verhältnis zu dem Rohr (5) ermöglicht wird durch die Anwesenheit zweier Paare vorbestimmter dritter Öffnungen (24), die diametral zueinander und axial zu dem Käfig (19) geformt sind.

7. Die Vorrichtung gemäß den Ansprüchen 1 und 6, **dadurch gekennzeichnet, dass** erste Schrauben (25) an den zwei Paaren geeignet bereitgestellter dritter Öffnungen (24) wirken und mit dem Rohr (5) assoziiert sind und radial davon herausragen und weiter mit geeignet bereitgestellten Sitzen verbunden sind, die in vier diametralen Rippen (26) geformt sind, welche axial zur äußeren seitlichen Oberfläche des Kegels (9) an seiner Basis (14) herausragen, wobei die ersten Schrauben (25) für die korrekte axiale Positionierung des Kegels (9) im Verhältnis zum Rohr (5) sorgen.

8. Die Vorrichtung gemäß den Ansprüchen 1 und 7, **dadurch gekennzeichnet, dass** der Schwimmer (20) eine im Wesentlichen zylindrische Form und, an seinem oberen Ende (26), eine zweite Dichtung (27) hat, die kegelstumpfförmig ist und die ausgebildet ist, um mit der darüber liegenden unteren perimetrischen Kante (28) des Rohrs (5) zu interagieren, um den Durchfluss des Kraftstoffs (2) zu blockieren, wobei der Schwimmer (20), nahe seinem unteren Ende, einen ringförmigen Sitz (29) für komplementär geformte Zähne (30) hat, die radial und zur Innenseite der Führung (19) hin an ihrem unteren Ende (21) ragen, um die Verbindung des Schwimmers (20) mit der Führung (19) zu ermöglichen.

9. Die Vorrichtung gemäß den Ansprüchen 1 und 8, **dadurch gekennzeichnet, dass** sie Mittel umfasst, um das Füllen des Tanks selbst über die Höhe der Anordnung des Schwimmers (20) im inaktiven Zustand hinaus zu ermöglichen, wobei die Mittel in vier zurückziehbaren Laschen (31) bestehen, von denen jede, in einer Draufsicht, eine im Wesentlichen S-förmige Anordnung hat, um so einen oberen Flügel (32) und einen unteren Flügel (33) zu bilden, zwischen denen ein Zahn (34) erhalten wird und ragt, wobei der Zahn (34) schnabelförmig ist und daher eine bogenförmige obere Kante (35) hat und jeder der Zähne (34) an Schlitzen (36) wirkt, die axial zu dem Trichter (8) an dessen unterem Ende (37) geformt sind, um so die Positionierung der Zähne (34) in dem Trichter (8) in einem Bereich zu ermöglichen, der oberhalb der Spitze (13) des Kegels (9) liegt.

10. Die Vorrichtung gemäß den Ansprüchen 1 und 9, **dadurch gekennzeichnet, dass** das untere Ende (37) des Trichters (8) an einem Sitz verbunden ist, der an der inneren Führung (16) geformt ist, um so eine durchgehende Leitung für das Einströmen von Kraftstoff zu ermöglichen, wobei die Schlitze (36) die innere Führung (16) teilweise beeinflussen.

11. Die Vorrichtung gemäß den Ansprüchen 1 und 10, **dadurch gekennzeichnet, dass** die Zähne (34) aufgrund der Tatsache zurückziehbar sind, dass der obere Flügel (32) drehbar mit einem Grat (38) verbunden ist, der in der inneren Führung (16) angrenzend an die äußere seitliche Oberfläche des Trichters (8) angeordnet ist, wobei der untere Flügel (33) jedes Zahns (34) durch ein elastisches Element (39), das die Zähne (34) vollständig umgibt, gezwungen wird, die Zähne (34) an der Kraftstoff-Einlassleitung zu halten, wobei die zurückziehbaren Laschen (31) an einer Kammner (16a) untergebracht werden, die an der inneren Führung (16) an ihrem oberen Ende geformt ist.

12. Die Vorrichtung gemäß den Ansprüchen 1 und 11, **dadurch gekennzeichnet, dass** die Position der zurückziehbaren Laschen (31) aus einem stabilen Zustand modifiziert werden kann, und zwar aufgrund des Einführens der Kraftstoffabgabedüse (41), die mit der oberen hogenförmigen Kante (35) jedes Zahns (34) interagiert und ihn zwingt, sich zu drehen, bis er sich in jedem Schlitz (36) bewegt, wobei das elastische Element gedehnt wird, wobei die Bewegung ermöglicht wird, da die Spitze jedes unteren Flügels (33) jedes Zahns (34) so angeordnet ist, dass sie vierten Öffnungen (42) gegenüberliegt, die an dem Rohr (5) geformt sind.

13. Die Vorrichtung gemäß den Ansprüchen 1 und 12, **dadurch gekennzeichnet, dass** in dem Zustand, in dem der untere Flügel (33) an den vierten Öffnungen (42) herausragt, der Zustand eintreten kann, in dem die unteren Flügel (33) fünfte Öffnungen (43) beeinflussen, die an der Führung (19) nahe ihrem oberen Ende (44) geformt sind.

14. Die Vorrichtung gemäß einem oder mehreren der obigen Ansprüche, **dadurch gekennzeichnet, dass** während der Abgabe des Kraftstoffs in den Tank der Ausgangsabschnitt (15) frei ist, da die zweite Dichtung (27) des Schwimmers (20) nicht mit der unteren perimetrischen Kante (28) des Rohrs (5) interagiert, wodurch das fortschreitende Anheben des Schwimmers begrenzt wird, da der Abschnitt (15) offen bleibt, und zwar durch die Interaktion der unteren Flügel (33) der zurückziehbaren Laschen (31) mit dem oberen Ende (44) der Führung (19), wobei, sobald der Tank gefüllt und die Abgabedüse entnommen wurde, die zurückziehbaren Laschen (31) von dem elastischen Element (39) so gedrückt werden, dass die unteren Flügel (33) die vierten Öffnungen (42) oder die fünften Öffnungen (43) nicht mehr beeinflussen, um es dem Schwimmer (20) zu ermöglichen, weiter zu steigen, wodurch auch die Führung (19) gedrückt wird, was es ermöglicht, die Blockierung des Ausgangsabschnitts (15) für den Durchfluss von Kraftstoff zu erzielen.

## Revendications

1. Dispositif antivol, en particulier pour empêcher le prélèvement d'essence dans un réservoir, comprenant un tube (5), muni d'une première bague (4) qui peut être associée à un adaptateur pour accéder à un réservoir et qui comporte intérieurement, au voisinage immédiat de ladite première bague (4), un entonnoir de guidage (8) pour un cône axial sous-jacent (9) conçu pour guider et diriger l'écoulement du carburant en un courant de fluide, **caractérisé en ce qu'**il a, à sa base, un diamètre extérieur un peu plus petit que le diamètre intérieur dudit tube (5), de manière à former une section de sortie pour le passage du carburant, un guide (19) pour un flotteur (20) étant associé de manière à pouvoir coulisser coaxialement audit tube (5), ledit flotteur (20) étant conçu pour se déplacer entre une situation de fermeture et une situation d'ouverture de ladite section de sortie, un moyen étant prévu pour permettre le remplissage du réservoir même au-delà du niveau où se trouve ledit flotteur (20) en position de repos.

2. Dispositif selon la revendication 1, **caractérisé en ce que** l'extrémité (7) d'un entonnoir de guidage (8) pour un cône axial sous-jacent (9) est associée axialement à l'intérieur et au voisinage immédiat de ladite première bague (4), lequel cône est conçu pour guider et diriger l'écoulement du carburant (2) en un courant de fluide, un premier joint (10) étant intercalé entre la surface annulaire inférieure de ladite première bague (4) et une seconde bague sous-jacente (6), ledit joint (10) étant avantageusement du type joint de clapet et lequel, dans la situation où le dispositif (1) est inséré dans l'adaptateur (3), coopère partiellement avec la surface supérieure (11) dudit adaptateur (3).

3. Dispositif selon les revendications 1 et 2, **caractérisé en ce que** ledit cône (9) est pourvu, dans une partie supérieure, d'une pointe (13) orientée vers ledit entonnoir (8) et conçue pour améliorer le comportement du flux de carburant, ledit cône (9) ayant à sa base (14) un diamètre extérieur un peu plus petit que le diamètre intérieur dudit tube (5), de manière à former une section transversale de sortie (15) pour le passage de carburant coaxialement audit cône (9) de manière à affecter également la zone sous-jacente de la pointe (13), un guide intérieur tubulaire (16) étant prévu pour envelopper, dans une zone supérieure et extérieurement, le pourtour de la surface extérieure dudit entonnoir (8) et reposer sur, et être assemblé avec ledit tube (5) et à ladite seconde bague (6).

4. Dispositif selon les revendications 1 et 3, **caractérisé en ce que** ledit guide intérieur (16) s'étend axialement, épousant intérieurement la forme dudit cône (9), de manière à former pour le carburant, conjointement avec ledit cône, un trajet conçu pour former un courant de fluide, la stabilité de la position dudit guide intérieur (16) étant obtenue en dotant le guide, à l'extrémité inférieure (17), d'une saillie annulaire (18) qui repose sur la surface latérale intérieure dudit tube (5).

5. Dispositif selon les revendications 1 et 4, **caractérisé en ce que**, dans la zone affectée par ledit cône (9), un guide (19) pour un flotteur (20), conçu pour se déplacer entre une position de fermeture et une position d'ouverture de ladite section de sortie (15), est associé de manière à coulisser extérieurement par rapport audit tube (5).

6. Dispositif selon les revendications 1 et 5, **caractérisé en ce que** ledit guide (19) a la forme d'une cage, avantageusement réalisée en deux parties qui peuvent être réunies l'une à l'autre et a, sur sa surface latérale, tout près de l'extrémité inférieure (21), des premières ouvertures (22) et des deuxièmes ouvertures (23) conçues pour permettre au carburant de sortir et ayant de préférence une forme annulaire, le coulissement axial dudit guide (19) par rapport audit tube (5) étant autorisé du fait de la présence de deux paires de troisièmes ouvertures préétablies (24) qui sont formées diamétralement l'une par rapport à l'autre et axialement par rapport à ladite cage (19).

7. Dispositif selon les revendications 1 et 6, **caractérisé en ce que** des premières vis (25) agissent au niveau desdites deux paires de troisièmes ouvertures (24) ménagées de manière adéquate et sont associées audit tube (5) depuis lequel elles font radialement saillie, et sont en outre logés dans des sièges ménagés de manière adéquate qui sont formés dans quatre nervures diamétrales (26) faisant axialement saillie par rapport à la surface latérale extérieure dudit cône (9) à sa base (14), lesdites premières vis (25) assurant l'obtention d'une position axiale correcte du cône (9) par rapport au tube (5).

8. Dispositif selon les revendications 1 et 7, **caractérisé en ce que** ledit flotteur (20) a une forme sensiblement cylindrique et, à son extrémité supérieure (26), un second joint (27) de forme tronconique, conçu pour coopérer avec le bord périphériques inférieur susjacent (28) du tube (5), de manière à obstruer le passage du carburant (2), ledit flotteur (20) ayant, tout près de son extrémité inférieure, un siège annulaire (29) pour des dents (30) d'une forme complémentaire qui font saillie radialement et vers l'intérieur du guide (19) à son extrémité inférieure (21), de manière à permettre au flotteur (20) de se loger dans ledit guide (19).

9. Dispositif selon les revendications 1 et 8, **caractérisé en ce qu'**il comprend des moyens pour permettre le remplissage dudit réservoir même au-delà du niveau ou se trouve ledit flotteur (20) dans la position de repos, lesdits moyens étant constitués par quatre languettes escamotables (31) dont chacune, vue en plan, a une configuration sensiblement en S afin de former une aile supérieure (32) et une aile inférieure (33) entre lesquelles est créée une dent saillante (34), ladite dent (34) étant en forme de bec et ayant un bord supérieur (35) ressemblant à un arc, chacune desdites dents (34) agissant au niveau de fentes (36) formées axialement par rapport audit entonnoir (8) à l'extrémité inférieure (37) de celui-ci, afin de permettre auxdites dents (34) de se placer à l'intérieur dudit entonnoir (8) dans une zone située au-dessus de ladite pointe (13) dudit cône (9).

10. Dispositif selon les revendications 1 et 9, **caractérisé en ce que** l'extrémité inférieure (37) dudit entonnoir (8) est logée dans un siège formé sur ledit guide intérieur (16), afin de former un conduit continu pour l'entrée de carburant, lesdites fentes (36) affectant partiellement ledit guide intérieur (16).

11. Dispositif selon les revendications 1 et 10, **caractérisé en ce que** lesdites dents (34) sont escamotables du fait que ladite aile supérieure (32) est assemblée à rotation avec une saillie (38) créée dans ledit guide intérieur (16) au voisinage immédiat de la surface latérale extérieure dudit entonnoir (8), ladite aile inférieure (33) de chaque dent (34) étant sollicitée, afin de maintenir lesdites dents (34) au niveau du conduit d'entrée de carburant, au moyen d'un élément élastique (39), lequel est enroulé autour de toutes lesdites dents (34), lesdites languettes escamotables (31) étant reçues dans un compartiment (16a) formé sur ledit guide intérieur (16) à son extrémité supérieure.

12. Dispositif selon les revendications 1 et 11, **caractérisé en ce que** la positon desdites languettes escamotables (31) est modifiable à partir d'une situation stable, du fait de l'insertion du pistolet de distribution (41) de carburant, lequel coopère avec le bord supérieur (35) en arc de chaque dent (34), amenant celui-ci à tourner jusqu'à ce qu'il pénètre dans chaque fente (36), en allongeant ledit élément élastique, ledit mouvement étant permis car le bout de chaque aile inférieure (33) de chaque dent (34) est conçu pour être en regard de quatre ouvertures (42) formées au niveau dudit tube (5).

13. Dispositif selon les revendications 1 et 12, **caractérisé en ce que**, dans la situation dans laquelle ladite aile inférieure (33) fait saillie au niveau desdites quatre ouvertures (42), peut survenir la situation dans laquelle lesdites ailes inférieures (33) affectent des cinquièmes ouvertures (43) formées sur ledit guide (19) au voisinage immédiat de son extrémité supérieure (44).

14. Dispositif selon une ou plusieurs des revendications précédentes, **caractérisé en ce que**, pendant la distribution du carburant dans ledit réservoir, ladite section de sortie (15) est libre, puisque ledit second joint (27) dudit flotteur (20) ne coopère pas avec ledit bord périphérique inférieur (28) du tube (5), la montée progressive dudit flotteur étant limitée, car ladite section (15) reste ouverte, du fait de l'interaction desdites ailes inférieures (33) desdites languettes escamotables (31) avec l'extrémité supérieure (44) dudit guide (19), une fois que ledit réservoir a été rempli et que ledit pistolet de distribution a été ressorti lesdites languettes escamotables (31) étant sollicitées par ledit élément élastique (39) de façon que lesdites ailes inférieures (33) n'affectent plus lesdites quatrièmes ouvertures (42) au lesdites cinquièmes ouvertures (43), de manière à permettre audit flotteur (20) de s'élever davantage, en poussant également ledit guide (19), ce qui permet d'obtenir l'obstruction de ladite section de sortie (15) pour le passage de carburant.
